# EUROPÄISCHE PATENTSCHRIFT

(11) **EP 1 281 007 B1**
(45) Veröffentlichungstag und Bekanntmachung des Hinweises auf die Patenterteilung: **17.12.2003**
(21) Anmeldenummer: 01929592.2
(22) Anmeldetag: 21.04.2001
(51) Int. Cl.: F16C 32/04

(54) **MASCHINE, VORZUGSWEISE VAKUUMPUMPE, MIT MAGNETLAGERN**
MACHINE, PREFERABLY A VACUUM PUMP, WITH MAGNETIC BEARINGS
MACHINE, NOTAMMENT POMPE A VIDE, DOTEE DE PALIERS MAGNETIQUES

(30) Priorität: 06.05.2000 DE 10022062
(43) Veröffentlichungstag der Anmeldung: 05.02.2003
(73) Patentinhaber: Leybold Vakuum GmbH, 50968 Köln (DE)
(72) Erfinder: ENGLÄNDER, Heinrich, 52441 Linnich (DE); HODAPP, Josef, 50935 Köln-Sülz (DE)
(74) Vertreter: Leineweber, Jürgen, Dipl.-Phys.
(86) Internationale Anmeldenummer: EP0104531
(87) Internationale Veröffentlichungsnummer: WO01086158

(56) Entgegenhaltungen:
- EP-A- 0 414 127
- DE-A- 3 818 556
- US-A- 3 938 913
- US-A- 5 106 273
- US-A- 5 209 631
- US-A- 5 394 044
- US-A- 5 910 695

## Beschreibung

Die Erfindung betrifft eine Maschine mit einem Stator, mit einem mittels radial stabiler und axial labiler Magnetlager gelagerten Rotor, wobei die Magnetlager jeweils aus konzentrisch angeordneten Magnetringpaketen bestehen, bei denen das ortsfeste Magnetringpaket innen und das rotierende Magnetringpaket außen angeordnet ist, sowie mit Mitteln zur Regelung der axialen Lage des Rotors. Die Magnetlagerung soll so ausgebildet sein, dass sie insbesondere zur Lagerung der Rotoren in Gebläsen oder Vakuumpumpen, vorzugsweise mit hoher Drehzahl betriebenen Reibungsvakuumpumpen, geeignet ist.

Der Einsatz von Magnetlagern in Turbomolekularvakuumpumpen ist bekannt (vgl. EP 414 127 A1) und hat sich bewährt. Die genannte Schrift offenbart Magnetlager, die aus miteinander verzahnten Stator- und Rotormagnetringpaketen bestehen. Bei Magnetlagern dieser Art und damit auch bei den damit ausgerüsteten Maschinen ist der Montageaufwand sehr hoch. Außerdem bereiten Änderungen der Länge des Rotors, welche bei Temperaturbelastungen auftreten, Lagerprobleme.

Aus der DE-A 38 18 556 ist eine Maschine mit den Merkmalen der eingangs genannten Art bekannt. Es handelt sich um eine Turbomolekularvakuumpumpe mit zwei passiven, radial stabilen und axial labilen Magnetlagern. Die Mittel zur Regelung der axialen Lage des Rotors bestehen zum einen darin, dass der Arbeitspunkt der Magnetlager derart gewählt wird, dass er in Bezug auf den labilen Punkt in Richtung Hochvakuumseite verschoben ist, und zum anderen darin, dass ein von den Magnetlagern unabhängiges Hubsystem vorgesehen ist, mit dem die durch die Verschiebung des Arbeitspunktes wirkenden axialen Kräfte ständig kompensiert werden. Bei einer Lösung dieser Art sind sowohl die Regelung als auch die dazu notwendigen Mittel aufwendig.

Der vorliegenden Erfindung liegt die Aufgabe zugrunde, eine Maschine mit den eingangs erwähnten Merkmalen zu schaffen, die im Vergleich zu den Lösungen nach dem Stand der Technik einfacher ist.

Erfindungsgemäß wird diese Aufgabe durch die kennzeichnenden Merkmale der Patentansprüche gelöst.

Bei einer Maschine nach der Erfindung sind verzahnte Magnetringpakete nicht mehr vorhanden, so dass der Montageaufwand reduziert ist. Ein von den Magnetlagern unabhängiges Hubsystem zur Regelung der axialen Lage des Rotors ist nicht mehr erforderlich. Die Lagerung insgesamt besteht aus weniger voneinander verschiedenen Einzelteilen, so dass Fertigungstiefe, Lagerhaltung und Logistik vereinfacht sind.

Weitere Vorteile und Einzelheiten der Erfindung sollen an Hand der Figuren 1 bis 10 erläutert werden.
Es zeigen
- Figuren 1 und 2 eine schematische Darstellung von Maschinen mit Rotoren, die sich jeweils in einer erfindungsgemäß ausgebildeten Magnetlagerung abstützen,
- Figur 3 eine Turbomolekular-/Molekularvakuumpumpe mit der erfindungsgemäßen Lagerung,
- Figuren 4 bis 7 Teilschnitte durch Magnetlager nach der Erfindung mit unterschiedlich gestalteten Mitteln zur Axialregelung und
- Figuren 8 bis 10 Beispiele für Gestaltungen der Magnetlager mit Dämpfungsmitteln.

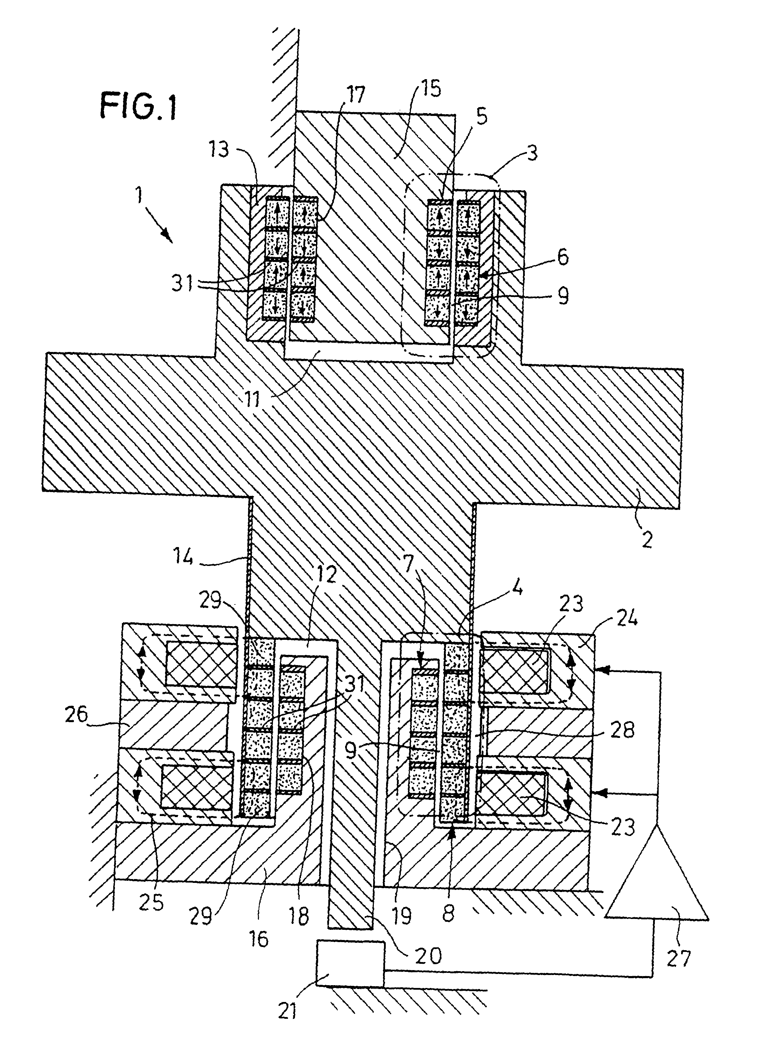

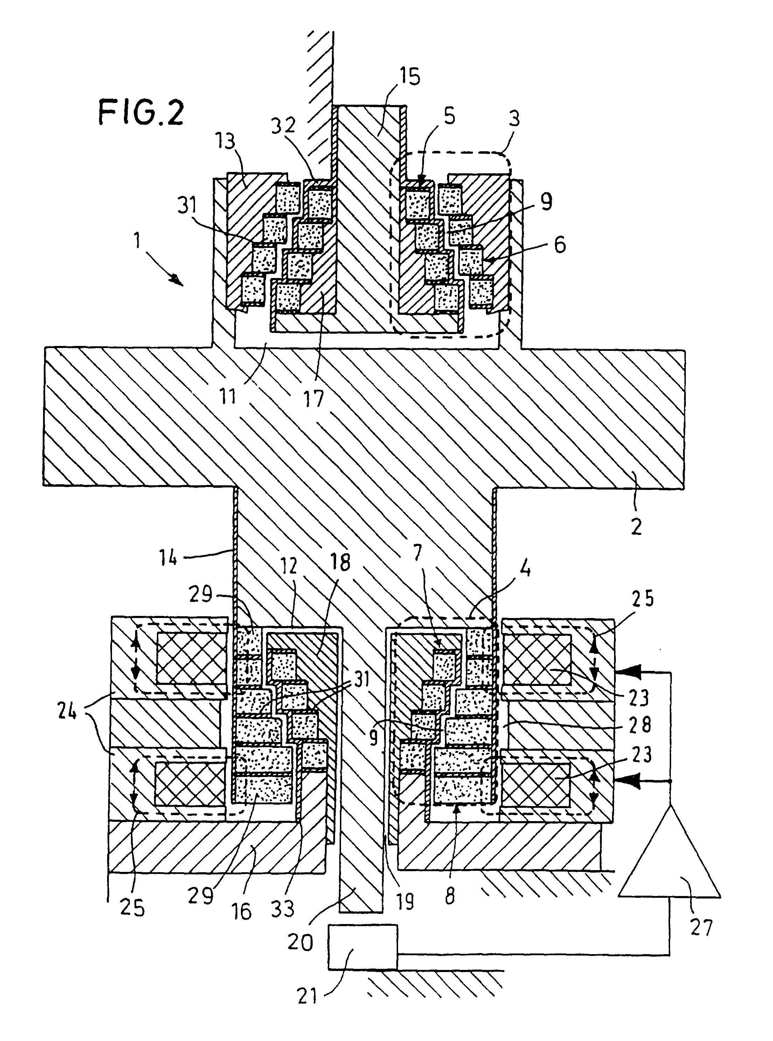

Bei den in den Figuren 1 und 2 schematisch dargestellten Maschinen 1 ist das rotierende System 2 in zwei Magnetlagern 3, 4 aufgehängt. Jedes der Magnetlager 3, 4 besteht aus zwei Ringpaketen 5, 6 (Lager 3) bzw. 7, 8 (Lager 4). Das jeweils innere Ringpaket 5, 7 ist ortsfest montiert, die äußeren Ringpakete 6, 8, die das jeweils innere Ringpaket konzentrisch und berührungsfrei (Spalt 9) umgeben, sind Bestandteile des rotierenden Systems 2. Der Aufbau ist insgesamt rotationssymmetrisch. Ein Antriebsmotor ist nicht dargestellt.

Das rotierende System 2 ist auf beiden Stirnseiten mit zentralen Ausnehmungen 11, 12 versehen. Die Wandungen dieser Ausnehmungen bilden Aufnahmen 13, 14 für die rotierenden Magnetringpakete 6, 8. Bei der Aufnahme 14 handelt es sich um eine rohrförmige Armierung aus nicht magnetisierbarem Werkstoff, z.B. CFK, welche vorzugsweise über einen Presssitz am rotierenden System 2 befestigt ist. Ein die Ausnehmung 12 umgebender Abschnitt der Armierung 14 trägt auf seiner Innenseite das Magnetringpaket 8.

In die Ausnehmungen 11, 12 ragen ortsfeste Träger 15, 16 mit Aufnahmen 17, 18 für die ortsfesten Magnetringpakete 5, 7 derart hinein, dass die äußeren Ringpakete 6, 8 die inneren Pakete 5, 6 konzentrisch umfassen. Die in den Figuren jeweils unteren Träger 16 weisen eine zentrale Bohrung 19 für einen Wellenstumpf 20 des rotierenden Systems 2 auf, dessen Stirnseite ein Axialsensor 21 zugeordnet ist.

Der Axialsensor 21 ist Bestandteil der Mittel zur Axialregelung des Magnetlagers 4. Ein oder mehrere Spulen 23 mit jeweils einem U-förmigen, zum Ringpaket 8 hin offenen Joch 24 erzeugen die mit gestrichelten Linien und Pfeilen 25 angedeuteten Magnetfelder. In den Figuren 1 und 2 sind jeweils zwei das Ringpaket 8 umgebende Spulen 23 vorgesehen. Ihre Jochbauteile 24 sind durch eine Distanzscheibe 26 aus nicht-ferritischem Werkstoff voneinander getrennt.

Der Steuerung der Spulen bzw. der von den Spulen 23 erzeugten Magnetfelder in Abhängigkeit der vom Sensor 21 gelieferten Signale dient ein Regler 27. Im Spalt 28 zwischen den jeweils äußeren, rotierenden Ringpaketen 6, 8 und den Spulen 23 bzw. Stirnseiten der Schenkel der Jochbauteile 24 werden die der Axial-Regelung dienenden Magnetkräfte wirksam.

Die Ringpakete 5 bis 8 bestehen jeweils aus in axialer Richtung magnetisierten Ringen, die derart polwechselnd (beispielhaft angedeutet im Lager 3 nach Figur 1) angeordnet sind, dass die Ringpakete 5, 6 bzw. 7, 8 der Magnetlager 3, 4 einander abstoßen. Vorzugsweise sind so viele Außen- und Innenringpaare vorgesehen, dass jedes der Magnetringpakete auf beiden Seiten mit dem gleichen Magnetpol endet. Bei der Lösung nach Figur 1 bilden die Ringpakete 5, 6 bzw. 7, 8 jeweils zwei konzentrisch zueinander angeordnete Zylinder. Die Abmessungen der Magnetringe der Magnetringpakete 5, 7 bzw. 6, 8 sind zweckmäßig jeweils identisch. Bei der Lösung nach Figur 2 verändern sich die Durchmesser der einander zugewandten Umfangsflächen der Ringe beider Ringpakete 5, 6 bzw. 7, 8 der Lager 3, 4 stufenweise (gleichsinnig), so dass auch der Spalt 9 Stufenform hat. Auch der Spalt 28 im Lager 4 kann (anders als in Figur 2 dargestellt) Stufenform haben.

Im oberen Lager 3 kann der Querschnitt des rotierenden Magneten kleiner gehalten werden als im Lager 4. Dies spart Kosten für Magnetmaterial.

In Lager 4 ist es erforderlich, dass der Spalt 28 zwischen Polflächen der Jochbauteile und den Magneten, die über den konstanten Innendurchmesser des CFK-Rohres gehalten werden, klein ist, damit das Axiallager auf die Magneten wirken kann.

Die Ringe der Magnetringpakete 5 bis 8 sind fest in ihren Aufnahmen 13, 14, 17, 18 gehaltert. Beiden Stirnseiten eines jeden Magnetringes liegen kreisringförmige Distanzscheiben 31 an, die aus nicht ferritischen Werkstoffen bestehen, damit die magnetischen Kräfte vorzugsweise in den Spalten 9 bzw. 28 wirksam werden. Hat der Werkstoff der Distanzringscheiben 31 zusätzlich elektrisch gut leitende Eigenschaften (z. B. Kupfer), wird gleichzeitig eine Dämpfung der Rotorbewegungen erzielt.

Zusätzlich zu den Distanzscheiben können die einander zugewandten Flächen der Ringe der Ringpakete gekapselt sein, um die Magnetwerkstoffe vor aggressiven Gasen (z.B. Wasserstoff bei Reibungsvakuumpumpen) zu schützen. Als Beispiel sind in Figur 2 gestufte Hülsen 32, 33 für die jeweils ortsfesten Ringpakete 5, 7 dargestellt. Sie sind seitlich von den Ringpaketen mit den zugehörigen Aufnahmen gasdicht verbunden, z.B. verschweißt.

Vorzugsweise sind die Innen- und Außenringe der Ringpakete 5, 6 bzw. 7, 8 jeweils paarweise angeordnet. Zur Verbesserung der Axialregelung kann es zweckmäßig sein, dem äußeren, rotierenden Ringpaket 8 des axial aktiven Magnetlagers 4 weitere Ringe hinzuzufügen. Varianten dieser Art sind in den Figuren 1 und 2 dargestellt. Das Ringpaket 8 weist zwei Ringe mehr als das Ringpaket 7 auf. Die beiden äußeren, mit 29 bezeichneten Ringe wurden dem Paket 8 hinzugefügt. Dabei kann es sich um weich-ferritische Ringe handeln; vorzugsweise sind aber zwei weitere Magnetringe hinzugefügt.

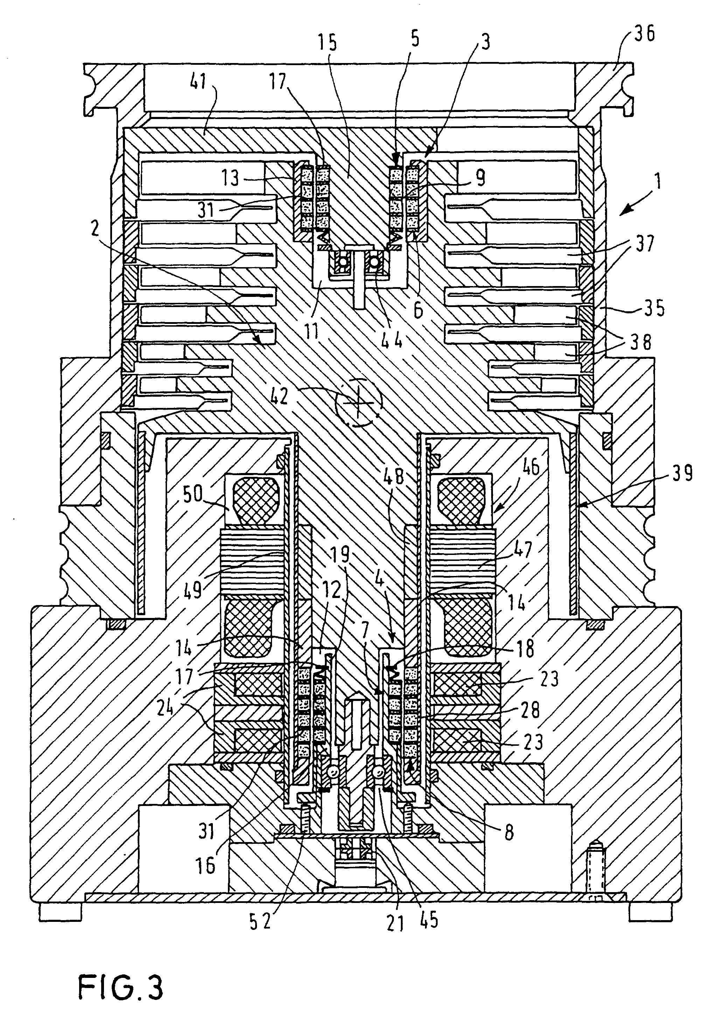

Bei der in Figur 3 dargestellten Maschine 1, einer Turbomolekular-/Molekularpumpe, sind im Gehäuse 35 mit dem Anschlussflansch 36 Statorschaufeln 37 montiert. Der magnetisch gelagerte Rotor 2 trägt Rotorschaufeln 38, die zwischen den Statorschaufeln 37 umlaufen und die Förderung der Gase bewirken. Bei der Pumpe 1 handelt es sich um eine Compound-Pumpe. An den mit Schaufeln ausgerüsteten Abschnitt schließt sich ein Molekularpumpenabschnitt 39 an.

Der Rotor 2 ist in den beiden Magnetlagern 3 und 4 aufgehängt. Das Magnetlager 3 befindet sich auf der Hochvakuumseite. Der Träger 15 des ortsfesten Magnetringpaketes 5 mit seiner Aufnahme 17 ist Bestandteil eines Lagersterns 41.

Das Magnetlager 4 befindet sich auf der Vorvakuumseite der Pumpe 1. Beide Lager haben etwa die gleiche Steifigkeit. Der Schwerpunkt des rotierenden Systems 2 ist mit 42 bezeichnet.

Die Pumpe 1 ist mit Notlauflagern oder Fanglagern 44, 45 ausgerüstet. Das hochvakuumseitige Fanglager 44 befindet sich in der Rotorausnehmung 11. Das vorvakuumseitige Fanglager 45 ist unterhalb des Magnetlagers 4 zwischen dem Wellenstumpf 20 und dem ortsfesten Träger 16 angeordnet.

Als Antriebsmotor 46 ist ein Hochfrequenzmotor mit Stator 47 und Anker 48 vorgesehen. Statorseitig ist weiterhin ein Spaltrohr 49 vorgesehen, das den Statorraum 50 vakuumdicht zur Vorvakuumseite hin abdichtet. Das Spaltrohr 49 durchsetzt den Spalt 28 zwischen den Spulen 23 mit ihren Jochbauteilen 24 und dem rotierenden Magnetringpaket 8. Es besteht deshalb zweckmäßig aus nicht magnetisierbarem und elektrisch schlecht leitendem Werkstoff, z.B. CFK.

Rotorseitig ist die bereits beschriebene rohrförmige Armierung 14 vorgesehen. Sie armiert nicht nur das Ringpaket 8 sondern auch den Motoranker 48.

Um Toleranzen auszugleichen, lässt sich das Lager 4 über Justierschrauben 52 einstellen, auf denen der Träger 16 des ortsfesten Ringpaketes 7 ruht. Zweckmäßig wird so justiert, dass sich das rotierende System axial im labilen Arbeitspunkt befindet. Um diesen Punkt erfolgt die axiale Regelung mit wenig Energie.

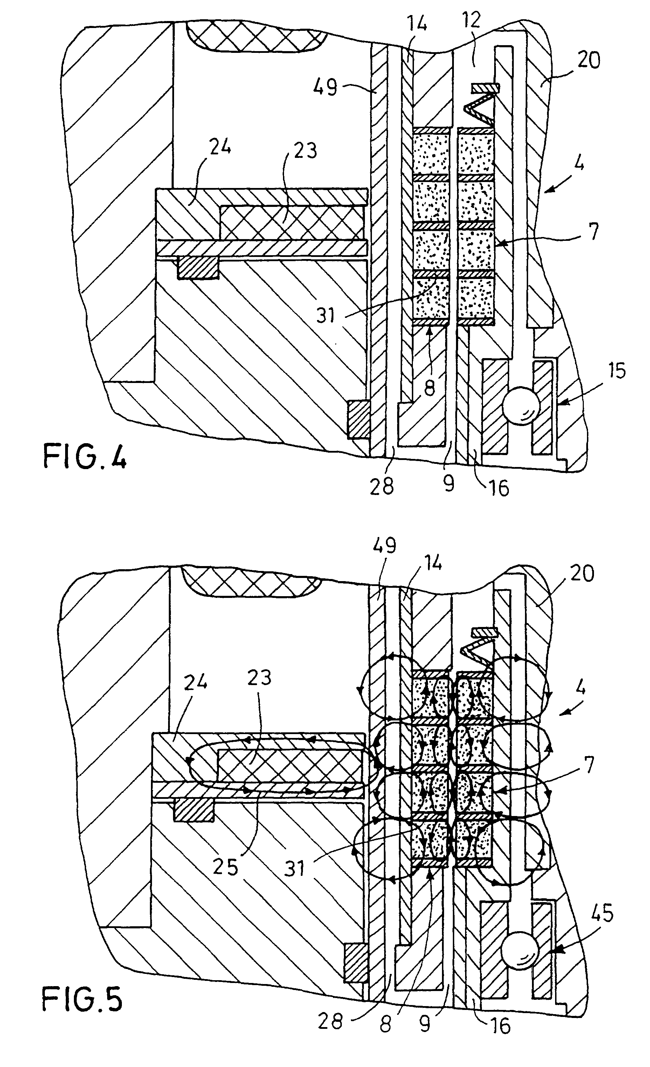

Die Figuren 4 bis 7 zeigen verschiedene Ausführungen für das aktive Magnetlager 4. Bei der Lösung nach den Figuren 4 (ohne Magnetfeldlinien) und 5 (mit Magnetfeldlinien) bilden jeweils vier Magnetringe die Ringpakete 7 und 8. Nur eine Spule 23 mit ihrem U-förmigen Joch 24 ist vorgesehen. Der Abstand der Stirnseiten der U-Schenkel des Jochs 24 entspricht etwa der axialen Abmessung eines Magnetringes des Ringpaketes 8. Zur Erzielung einer optimalen Wechselwirkung der Magnetkräfte liegen die Stirnseiten der U-Schenkel in Höhe der Mitten zweier benachbarter Magnetringe des Ringpaketes 8, bei der dargestellten Ausführung in Höhe der Mitten der beiden mittleren Magnetringe.

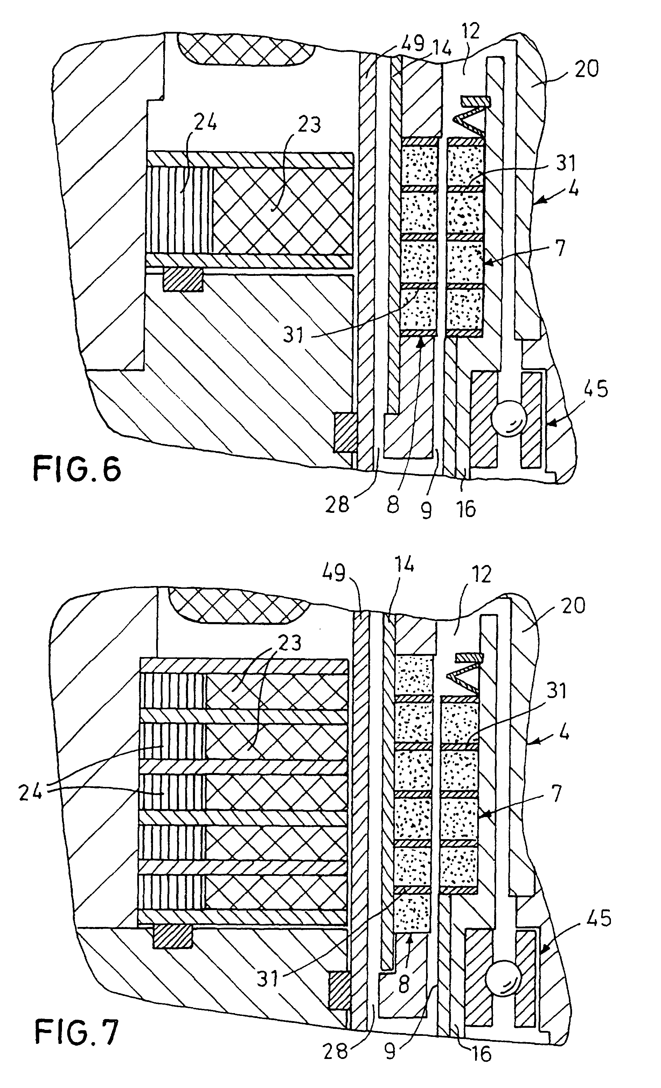

Bei der Ausführung nach Figur 6 ist ebenfalls nur eine Spule 23 mit ihrem Joch 24 vorgesehen. Der Abstand der den Ringen des Ringpaketes 8 zugewandten Stirnseiten der Schenkel des U-förmigen Jochs 24 entspricht etwa dem doppelten der axialen Abmessung eines Magnetringes. Figur 7 zeigt eine Lösung mit fünf Spulen 23 und Jochen 24. Das Ringpaket 8 weist sechs Magnetringe auf. Die Stirnseiten der insgesamt sechs Jochschenkel liegen etwa in der Höhe der Mitten der Magnetringe.

Zwischen jedem der Ringe der Magnetringpakete 7, 8 befinden sich - wie bereits beschrieben - Distanzringscheiben 31, die je nach Werkstoff Einfluss auf die Ausbildung der Magnetfeldlinien und/oder dämpfende Wirkung haben.

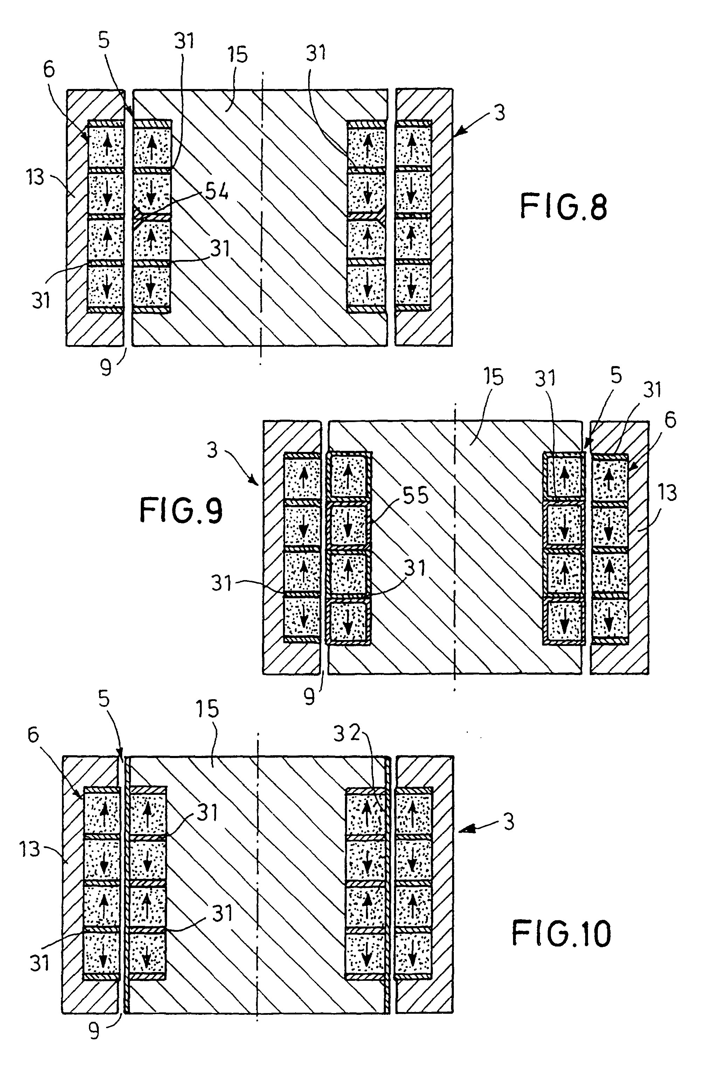

Zweckmäßige Gestaltungen der Distanzringscheiben 31, vorzugsweise zur Erzielung einer Dämpfungswirkung, sowie ergänzende Beschichtungen der Magnetringe werden an Hand von in den Figuren 8 bis 10 dargestellten Ausführungen des Magnetlagers 3 erläutert.

Besteht der Werkstoff der Distanzringscheiben 31 aus einem für die Erzielung der Dämpfungswirkung zweckmäßigen Werkstoff mit hoher elektrischer Leitfähigkeit, kann es zur Verbesserung der Dämpfungswirkung zweckmäßig sein, die Ränder der Distanzringscheiben 31 dort, wo das Magnetfeld in den Spalt 9 eintritt, zu verstärken, z. B. kontinuierlich nach außen zunehmend, und die Form der Magnetringe diesen Rändern anzupassen. In Figur 8 ist diese Ausführung dargestellt. Der spaltnahe verstärkte Rand der mittleren Distanzringscheibe 31 ist mit 54 bezeichnet. Dadurch, dass die Magnetfelder mehr leitendes Material durchfluten, werden die von Wirbelströmen erzeugten, die Dämpfung bewirkenden Gegenkräfte größer.

Bei der Ausführung nach Figur 9 sind beispielsweise die Magnetringe des Ringpaketes 5 allseitig beschichtet (Beschichtung 55). Seitlich haben sie die Funktion der Distanzscheiben 31, so dass sie bei ausreichender Dicke der Beschichtung 55 und geeigneter Werkstoffauswahl die die Magnetfeldlinien beeinflussende und/oder dämpfende Wirkung haben. Zusätzlich wird erreicht, dass die Magnetringe vor aggressiven Gasen geschützt sind. Dieser Schutz kann auch dadurch erreicht werden, dass eine Hülse 32 vorgesehen ist, sei sie stufenförmig, wie bereits zu Figur 2 beschrieben, oder zylindrisch, wie beispielsweise in Figur 10 (Ringpaket 5) dargestellt.

Die Distanzringscheiben 31 (bzw. Beschichtung 55) der Magnetringe müssen ausreichend dick sein, um ihre Zwekke zu erfüllen, zumal auch die gewünschte Steifigkeit des Lagers von der Dicke der Distanzscheiben abhängt. Bei Reibungspumpen mittlerer Größenordnung hat sich eine Dicke im Bereich von 0,25 mm bis 1,0 mm als zweckmäßig erwiesen.

Weiterhin hat sich die Verwendung von spiralförmig gewickelten Folienspulen 23 als zweckmäßig erwiesen, da ihr Raumbedarf relativ klein ist.

## Patentansprüche

1. Maschine (1) mit einem Stator, mit einem mittels radial stabiler und axial labiler Magnetlager (3, 4) gelagerten Rotor (2), wobei die Magnetlager (3, 4) jeweils aus konzentrisch angeordneten Magnetringpaketen (5, 6; 7,8) bestehen, bei denen das ortsfeste Magnetringpaket (5 bzw. 7) innen und das rotierende Magnetringpaket (6 bzw. 8) außen angeordnet ist, sowie mit Mitteln (21, 23, 24, 27) zur Regelung der axialen Lage des Rotors (2), **dadurch gekennzeichnet, dass** eines (4) der beiden Magnetlager (3, 4) selbst mit den Mitteln zur axialen Regelung ausgerüstet ist und dass mindestens eine von einem Lagesensor (21) gesteuerte Spule (23) sowie Polbauteile (24) das äußere Magnetringpaket (8) des axial geregelten Lagers (4) umgeben.

2. Maschine nach Anspruch 1, **dadurch gekennzeichnet, dass** die Magnetringpakete (5 bis 8) aus in axialer Richtung magnetisierten Ringen bestehen, die polwechselnd übereinander angeordnet sind, und dass die Ringpakete (5, 6 bzw. 7, 8) eines Lagers (3, 4) einander abstoßen.

3. Maschine nach Anspruch 2, **dadurch gekennzeichnet, dass** die Polbauteile (24) im Querschnitt U-förmig ausgebildet sind und dass die Stirnseiten der U-Schenkel der Polbauteile (24) dem äußeren Magnetringpaket (8) zugewandt sind.

4. Maschine nach Anspruch 3, **dadurch gekennzeichnet, dass** die Stirnseiten der U-Schenkel der Polbauteile (24) einen Abstand haben, der etwa dem einoder mehrfachen der axialen Abmessung eines Magnetringes entspricht, und dass die Spulen / Jochbauteile so angeordnet sind, dass die Stirnseiten der U-Schenkel in Höhe der Mitten von Magnetringen liegen.

5. Maschine nach Anspruch 4, **dadurch gekennzeichnet, dass** ein oder mehrere Spule(n) (23) mit einem bzw. jeweils einem U-förmigen Polbauteil (24) vorgesehen ist (sind).

6. Maschine nach einem der Ansprüche 2 bis 5, **dadurch gekennzeichnet, dass** bei n Magnetringen des äußeren Ringpaketes (8) n-1 Spulen (23) vorgesehen sind, die jeweils von U-förmig angeordneten Polbauteilen (24) umgeben sind, und dass die Schenkel der U-förmigen Jochbauteile (24) etwa in Höhe der Mitten der Magnetringe liegen.

7. Maschine nach einem der vorhergehenden Ansprüche, **dadurch gekennzeichnet, dass** die Anzahl der Magnetringe der beiden Ringpakete eines Magnetlagers verschieden ist.

8. Maschine nach Anspruch 7, **dadurch gekennzeichnet, dass** die Anzahl der Magnetringe des rotierenden Magnetringpaketes (6, 8) größer ist als die Anzahl der Magnetringe des ortsfesten Magnetringpaares (5, 7).

9. Maschine nach einem der vorhergehenden Ansprüche, **dadurch gekennzeichnet, dass** die Magnetringe der Ringpakete (5, 6, 7, 8) in Aufnahmen befestigt sind und dass als Aufnahme für die Magnetringe des äußeren Ringpaketes (8) des axial aktiven Lagers (4) eine rohrförmige Armierung (14) dient, die mit einem ersten Abschnitt am rotierenden System (2) befestigt ist und mit einem zweiten Abschnitt die Magnetringe des Ringpaketes (8) trägt.

10. Maschine nach Anspruch 9, **dadurch gekennzeichnet, dass** die Armierung (14) auch den Anker (48) eines Antriebsmotors (46) umgibt.

11. Maschine nach Anspruch 2 und einem der Ansprüche 3 bis 10, **dadurch gekennzeichnet, dass** zentral angeordnete Träger (15, 16) für die ortsfesten Magnetringpakete (5, 7) vorgesehen sind, dass einer der Träger (15, 16) mit einer zentralen Bohrung (19) ausgerüstet ist, dass ein Wellenstumpf (20) des rotierenden Systems (2) die Bohrung (19) durchsetzt und dass der freien Stirnseite des Wellenstumpfes (20) ein Axialsensor (21) zugeordnet ist.

12. Maschine nach Anspruch 11, **dadurch gekennzeichnet, dass** einer der Träger (15, 16) axial justierbar ist.

13. Maschine nach einem der vorhergehenden Ansprüche, **dadurch gekennzeichnet, dass** sich die Durchmesser der einander zugewandten Umfangsflächen der Ringe eines Ringpaketpaares (5, 6 bzw. 7, 8) stufenweise ändern.

14. Maschine nach einem der vorhergehenden Ansprüche, **dadurch gekennzeichnet, dass** zumindest zwischen einem Teil der Magnetringe der Magnetringpakete (5, 6, 7, 8) Distanzringscheiben (31) aus einem nicht ferritischen Werkstoff befinden.

15. Maschine nach Anspruch 1, **dadurch gekennzeichnet, dass** der Werkstoff der Distanzringscheiben (31) eine hohe elektrische Leitfähigkeit hat.

16. Maschine nach Anspruch 15, **dadurch gekennzeichnet, dass** spaltnahe Ränder (54) der Distanzringscheiben (31) verstärkt sind.

17. Maschine nach Anspruch 14, 15 oder 16, **dadurch gekennzeichnet, dass** Magnetringe gekapselt sind und dass die Schichten (55) der Kapselung die Funktion der Distanzringscheiben (31) haben.

18. Maschine nach Anspruch 14, 15 oder 16, **dadurch gekennzeichnet, dass** den spaltnahen Umfangsflächen der Magnetringe eine Hülse (32) zugeordnet ist.

19. Maschine nach einem der vorhergehenden Ansprüche, **dadurch gekennzeichnet, dass** sie als Reibungspumpe (1) ausgebildet ist und dass das passive Lager (3) auf der Hochvakuumseite, das axial aktive Lager (4) auf der Vorvakuumseite angeordnet ist.

20. Maschine nach Anspruch 19, **dadurch gekennzeichnet, dass** ein Antriebsmotor (46) mit einem Spaltrohr (49) vorgesehen ist und dass das Spaltrohr (49) den Spalt (28) des axial aktiven Lagers (4) durchsetzt.

## Claims

1. Machine (1) with a stator; with a rotor (2) mounted by means of radially stable and axially unstable magnetic bearings (3, 4), wherein the magnetic bearings (3, 4) each consist of concentrically arranged magnetic ring stacks (5, 6; 7, 8) in which the stationary magnetic ring stack (5 or 7) is arranged inside and the rotating magnetic ring stack (6 or 8) outside, and also with means (21, 23, 24, 27) for automatic control of the axial position of the rotor (2), **characterised in that** one (4) of the two magnetic bearings (3, 4) is itself fitted with the means for automatic axial control and at least one coil (23) controlled by a position sensor (21) and also pole components (24) surround the outer magnetic ring stack (8) of the axially automatically controlled bearing (4).

2. Machine according to claim 1, **characterised in that** the magnetic ring stacks (5 to 8) consist of rings magnetised in the axial direction, arranged above one another with alternating poles, and the ring stacks (5, 6 or 7, 8) of a bearing (3, 4) repel one another.

3. Machine according to claim 2, **characterised in that** the pole components (24) are constructed as U-shaped in cross-section and the front faces of the U-legs of the pole components (24) face the outer magnetic ring stack (8).

4. Machine according to claim 3, **characterised in that** the front faces of the U-legs of the pole components (24) are at a distance corresponding approximately to once or several times the axial dimension of a magnetic ring and the coils/yoke components are arranged in such a way that the front faces of the U-legs are located at the level of the centres of magnetic rings.

5. Machine according to claim 4, **characterised in that** one or more coil(s) (23) is/are provided with one or respectively one U-shaped pole component (24).

6. Machine according to one of claims 2 to 5, **characterised in that** where there are n magnetic rings of the outer ring stack (8) n-1 coils (23) are provided, surrounded in each case by pole components (24) arranged in a U-shape, and the legs of the U-shaped yoke components (24) are located at approximately the level of the centres of the magnetic rings.

7. Machine according to one of the preceding claims, **characterised in that** the number of magnetic rings of the two ring stacks of a magnetic bearing differs.

8. Machine according to claim 7, **characterised in that** the number of magnetic rings of the rotating magnetic ring stack (6, 8) is greater than the number of magnetic rings of the stationary pair of magnetic rings (5, 7).

9. Machine according to one of the preceding claims, **characterised in that** the magnetic rings of the ring stacks (5, 6, 7, 8) are mounted in receptacles and acting as receptacle for the magnetic rings of the outer ring stack (8) of the axially active bearing (4) is a tubular armouring (14), which is fixed with a first section to the rotating system (2) and with a second section carries the magnetic rings of the ring stack (8).

10. Machine according to claim 9, **characterised in that** the armouring (14) also surrounds the armature (48) of a drive motor (46).

11. Machine according to claim 2 and one of claims 3 to 10, **characterised in that** centrally arranged carriers (15, 16) are provided for the stationary magnetic ring stacks (5, 7), one of the carriers (15, 16) is fitted with a central bore (19), a shaft end (20) of the rotating system (2) penetrates the bore (19) and an axial sensor (21) is assigned to the open front face of the shaft end (20).

12. Machine according to claim 11, **characterised in that** one of the carriers (15, 16) is axially adjustable.

13. Machine according to one of the preceding claims, **characterised in that** the diameters of the circumferential faces of the rings of a pair of ring stacks (5, 6 or 7, 8) facing one another change in steps.

14. Machine according to one of the preceding claims, **characterised in that** there are spacing ring discs (31) made of a non-ferrite material at least between a part of the magnetic rings of the magnetic ring stacks (5, 6, 7, 8).

15. Machine according to claim 1, **characterised in that** the material of the spacing ring discs (31) has high electrical conductance.

16. Machine according to claim 15, **characterised in that** edges (54) of the spacing ring discs (31) close to the gap are reinforced.

17. Machine according to claim 14, 15 or 16, **characterised in that** magnetic rings are encapsulated and the layers (55) of the encapsulation have the function of the spacing ring discs (31).

18. Machine according to claim 14, 15 or 16, **characterised in that** a sleeve (32) is assigned to the circumferential faces of the magnetic rings close to the gap.

19. Machine according to one of the preceding claims, **characterised in that** it is constructed as a friction pump (1) and the passive bearing (3) is arranged on the high-vacuum side and the axially active bearing (4) on the fore-vacuum side.

20. Machine according to claim 19, **characterised in that** a drive motor (46) is provided with a collimator (49) and the collimator (49) penetrates the gap (28) of the axially active bearing (4).

## Revendications

1. Machine (1) comprenant un stator, avec un rotor (2) logé à l'aide de paliers magnétiques (3, 4) radialement stables et axialement labiles, les paliers magnétiques (3, 4) étant respectivement constitués de paquets d'anneaux magnétiques (5, 6 ; 7, 8) disposés de façon concentrique, dont le paquet d'anneaux magnétiques fixe (5 ou 7) est disposé à l'intérieur et le paquet d'anneaux magnétiques rotatif (6 ou 8) à l'extérieur, comprenant également des moyens (21, 23, 24, 27) pour la régulation de la position axiale du rotor (2), **caractérisée en ce que** l'un (4) des deux paliers magnétiques (3, 4) est muni lui-même des moyens pour la régulation axiale, et **en ce qu'**au moins une bobine (23) commandée par un capteur de position (21) ainsi que des composants polaires (24) entourent le paquet d'anneaux magnétiques extérieur (8) du palier (4) axialement régulé.

2. Machine selon la revendication 1, **caractérisée en ce que** les paquets d'anneaux magnétiques (5 à 8) comprennent des anneaux magnétisés dans la direction axiale, qui sont superposés à polarités alternées, et **en ce que** les paquets d'anneaux (5, 6 ou 7, 8) d'un palier (3, 4) se repoussent.

3. Machine selon la revendication 2, **caractérisée en ce que** les composants polaires (24) présentent une section transversale en forme de U, et **en ce que** les faces d'extrémité des branches de U des composants polaires (24) sont tournées vers le paquet d'anneaux magnétiques extérieur (8).

4. Machine selon la revendication 3, **caractérisée en ce que** les faces d'extrémité des branches de U des composants polaires (24) présentent un écartement correspondant sensiblement à une ou plusieurs fois la dimension axiale d'un anneau magnétique, et **en ce que** les bobines/composants de culasse sont disposés de telle sorte que les faces d'extrémité des branches de U se trouvent à mi-hauteur d'anneaux magnétiques.

5. Machine selon la revendication 4, **caractérisée en ce qu'**une ou plusieurs bobine(s) (23) est (sont) prévue (s) avec un ou à chaque fois un composant polaire (24) en forme de U.

6. Machine selon l'une quelconque des revendications 2 à 5, **caractérisée en ce que** pour n anneaux magnétiques du paquet d'anneaux extérieur (8) n-1 bobines (23 sont prévues, qui sont respectivement entourées de composants polaires (24) disposés en forme de U, et **en ce que** les branches des composants polaires en forme de U (24) se situent sensiblement à la mi-hauteur des anneaux magnétiques.

7. Machine selon l'une quelconque des revendications précédentes, **caractérisée en ce que** le nombre d'anneaux magnétiques dans les deux paquets d'anneaux d'un palier magnétique est différent.

8. Machine selon la revendication 7, **caractérisée en ce que** le nombre d'anneaux magnétiques du paquet d'anneaux magnétiques rotatif (6, 8) est plus grand que le nombre des anneaux magnétiques de la paire d'anneaux magnétiques fixe (5, 7).

9. Machine selon l'une quelconque des revendications précédentes, **caractérisée en ce que** les anneaux magnétiques des paquets d'anneaux (5, 6, 7, 8) sont fixés dans des logements, et **en ce que** comme logement pour les anneaux magnétiques du paquet d'anneaux extérieur (8) du palier (4) axialement actif sert une armature tubulaire (14) qui est fixée au système rotatif (2) par une première section et porte les anneaux magnétiques du paquet d'anneaux (8) par une deuxième section.

10. Machine selon la revendication 9, **caractérisée en ce que** l'armature (14) entoure également l'induit (48) d'un moteur d'entraînement (46).

11. Machine selon la revendication 2 et l'une quelconque des revendications 3 à 10, **caractérisée en ce que** des supports (15, 16) disposés de manière centrale sont prévus pour les paquets d'anneaux magnétiques fixes (5, 7), **en ce que** l'un des supports (15, 16) est muni d'un perçage central (19), **en ce qu'**un bout d'arbre (20) du système rotatif (2) traverse le perçage (19), et **en ce qu'**un capteur axial (21) est associé à l'extrémité libre du bout d'arbre (20).

12. Machine selon la revendication 11, **caractérisée en ce que** l'un des supports (15, 16) peut être ajusté axialement.

13. Machine selon l'une quelconque des revendications précédentes, **caractérisée en ce que** les diamètres des surfaces périphériques des anneaux d'une paire de paquets d'anneaux (5, 6 ou 7, 8), en regard les unes des autres, changent par paliers.

14. Machine selon l'une quelconque des revendications précédentes, **caractérisée en ce que** des rondelles de distance (31) réalisées en un matériau non ferritique sont disposées au moins entre une partie des anneaux magnétiques des paquets d'anneaux magnétiques (5, 6, 7, 8) .

15. Machine selon la revendication 1, **caractérisée en ce que** le matériau des rondelles de distance (31) présente une grande conductivité électrique.

16. Machine selon la revendication 15, **caractérisée en ce que** des bords (54) des rondelles de distance (31) proches de l'entrefer sont renforcés.

17. Machine selon la revendication 14, 15 ou 16, **caractérisée en ce que** des anneaux magnétiques sont blindés, et **en ce que** les couches (55) du blindage ont la fonction des rondelles de distance (31).

18. Machine selon la revendication 14, 15 ou 16, **caractérisée en ce qu'**une douille (32) est associée aux surfaces périphériques des anneaux magnétiques proches de l'entrefer.

19. Machine selon l'une quelconque des revendications précédentes, **caractérisée en ce qu'**elle est conçue comme une pompe à friction (1), et **en ce que** le palier passif (3) est disposé du côté du vide poussé et le palier axialement actif (4) du côté du vide préliminaire.

20. Machine selon la revendication 19, **caractérisée en ce qu'**un moteur d'entraînement (46) avec un tube d'entrefer (49) est prévu, et **en ce que** le tube d'entrefer (49) traverse l'entrefer (28) du palier axialement actif (4).
